# EUROPEAN PATENT SPECIFICATION

(11) **EP 2 638 458 B1**
(45) Date of publication and mention of the grant of the patent: **12.04.2017**
(21) Application number: 11839896.5
(22) Date of filing: 18.02.2011
(51) Int. Cl.: G06F 3/041, G06F 3/044

(54) **TOUCH DEVICE FOR DETERMINING REAL COORDINATES OF MULTIPLE TOUCH POINTS AND METHOD THEREOF**
BERÜHRUNGSVORRICHTUNG ZUR BESTIMMUNG DER ECHTEN KOORDINATEN MEHRERER BERÜHRUNGSPUNKTE UND VERFAHREN DAFÜR
DISPOSITIF TACTILE SERVANT À DÉTERMINER DES COORDONNÉES RÉELLES DE MULTIPLES POINTS TACTILES ET PROCÉDÉ ASSOCIÉ

(30) Priority: 13.11.2010 CN 201010550974
(43) Date of publication of application: 18.09.2013
(73) Proprietor: TPK Touch Solutions (Xiamen) Inc., Fujian 361009 (CN)
(72) Inventor: LIU, Yong, Xiamen Fujian 361009 (CN)
(74) Representative: 2K Patentanwälte Blasberg Kewitz & Reichel
(86) International application number: PCT/CN2011/071097
(87) International publication number: WO 2012/062062

(56) References cited:
- EP-A2- 2 196 889
- CN-A- 1 987 761
- CN-A- 101 561 730
- CN-A- 101 876 871
- US-A1- 2009 284 495
- US-A1- 2010 039 405

## Description

### BACKGROUND OF THE INVENTION

### FIELD OF THE INVENTION

The present disclosure relates to touch devices, and particularly, to a touch device for determining real coordinates of multiple touch points and a method thereof.

### DESCRIPTION OF THE RELATED ART

During the recent two decades, touch technologies are applied in a variety of consumer applications, such as touch screens in automated-teller machines (ATMs), track pads in laptop computers, and scroll wheels in media players. In these consumer applications, movement of an object such as a finger or a stylus along a surface of a touch device is detected by a touch sensor embedded inside the touch device to generate electrical signals for subsequent processes.

There are many types of touch sensing methods, such as resistive sensing type, capacitive sensing type, acoustic wave sensing type, optical sensing type and the like. For the capacitive sensing type, the touch sensor perceives touch locations by detecting the change in capacitance due to the proximity of a conductive object such as metal or a part of human body. The capacitive touch sensors are classified as projective capacitive sensors and surface capacitive sensors. The projective capacitive sensors contain a lattice electrode pattern, while the surface capacitive sensors include electrodes formed on periphery of a continuous conductive sheet.

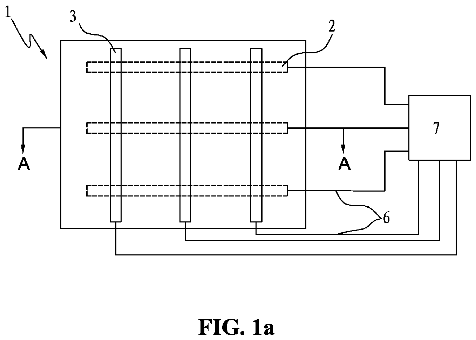

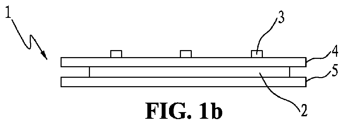

**FIG. 1a** and **FIG 1b** show a conventional projective capacitive touch device 1 including a plurality of first electrodes 2 arranged in a first direction, a plurality of second electrodes 3 arranged in a second direction, an insulator 4, a substrate 5, a plurality of wires 6 and a processor 7. The plurality of first electrodes 2 and the plurality of second electrodes 3 are intersected with each other to form a lattice pattern placed on the substrate 5. The insulator 4 is sandwiched between the plurality of first electrodes 2 and the plurality of second electrodes 3. The processor 7 is connected to the plurality of first electrodes 2 and the plurality of second electrodes 3 by the wires 6. When a conductive object such as a finger or a stylus is touching or moving on the surface of the projective capacitive touch device 1, the change in self capacitance of the first electrodes 2 and the second electrodes 3 can be transmitted to the processor 7, and then processed by the processor 7. The centroids of the change in self capacitance indicate the locations of the touch point in the first direction and the second direction of the projective capacitive touch device 1. The coordinates of the touch point is calculated by intersecting the centroids in the first direction and the second direction. In other words, the conventional method of detecting touch point includes: (a) scanning both the first electrodes 2 and the second electrodes 3; (b) computing centroids of the change in self capacitance in the first direction and the second direction; and (c) calculating the coordinates of the touch point based on the centroids.

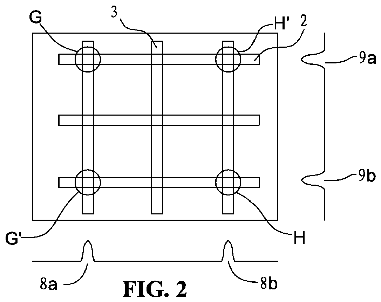

**FIG. 2** shows that when two touch points G, H appear on the surface of the projective capacitive touch device 1, two centroids 8a, 8b are computed on the first electrodes 2, while two centroids 9a, 9b are computed on the second electrodes 3. Thus, four raw coordinates G(8a,9a), G'(8a,9b), H'(8b,9a), H(8b,9b) are generated based on the four cenrtroids 8a, 8b, 9a, 9b. However, in these four raw coordinates, only two raw coordinates are real coordinates indicating the two touch points G, H, and the other two raw coordinates are defined as "ghost coordinates", which is the coordinates of so-called "ghost points".

As a result, when the conventional projective capacitive touch device 1 determining multiple points, the ghost coordinates are inevitably generated in the determining process of the conventional projective capacitive touch detection device 1, which limit the application and operation of the conventional projective capacitive touch device for determining multiple touch points. Therefore, it is necessary to eliminate the ghost coordinates during the process of determining multiple touch points located on the touch device mentioned above.
EP 2 196 889 A relates to architecture and method for multi-aspect touchscreen scanning. This architectures employs a single type of circuitry capable to perform both signal generation and signal detection for performing both zone scanning and cross point within a touchscreen to identify a user's interaction with the touchscreen and to discriminate actual touch locations on the touchscreen (including multiple, concurrent user touch locations on the touchscreen). This signal generation/detection circuitry can be implemented multiple times within the architecture (e.g., one for providing/detecting signals of conductors aligned in a first direction across the touchscreen, and another for providing/detecting signals of conductors aligned in a second direction across the touchscreen). Moreover, a combination of both zone scanning and cross point within the touchscreen allows for a very accurate discrimination between false/phantom touch locations and actual/real touch locations made by a user interacting with the touchscreen.
US 2010 039 405 A relates to a projective capacitive touch apparatus and a method for identifying multi-touched positions. The multi-touched positions are touched on a projective capacitive touch panel. The method comprises the following steps: generating a first set of reference values according to the first touch position; generating a plurality of second sets of reference values according to a second touch position, and filtering out at least one ghost second set of reference values from the second sets of reference values. Furthermore, the plurality of second sets of reference values comprise a real second set of reference value and at least one ghost second set of reference values, while the ghost second set of reference values comprises parts of the first set of reference values.

### SUMMARY OF THE INVENTION

It is an objective of the present disclosure to provide a touch device for determining multiple touch points, which device can eliminate ghost coordinates from the raw coordinates of the touch points to determine the real coordinates.

The touch device for determining real coordinates of multiple touch points includes a plurality of electrodes and a scanning circuit having a Normal Scanning Circuit and a Split Scanning Circuit connected to said electrodes. The Normal Scanning Circuit is used to scan the electrodes for detecting the raw coordinates of multiple touch points (herein referred to as the "Normal Scanning Circuit"), while the Split Scanning Circuit is used to scan the electrode parts, from division of the electrodes into two separate parts, selected from the first A electrodes, the first B electrodes, the second A electrodes and the second B electrodes, for eliminating ghost coordinates of said multiple touch points from said raw coordinates of said multiple touch points to determine said real coordinates of said multiple touch points (herein referred to as the "Split Scanning Circuit").

It is another objective of the present disclosure to provide a method of determining real coordinates of multiple touch points.

The method of determining real coordinates of multiple touch points includes: (a) scanning a plurality of electrodes both in a first direction and a second direction to detect raw coordinates of said touch points by a Normal Scanning Circuit; and (b) scanning said electrodes to determine real coordinates of said touch points in said raw coordinates by a Split Scanning Circuit.

By means of the present disclosure, a touch device can eliminate the ghost coordinates and output the real coordinates during the process of determining multiple touch points thus overcoming the disadvantage of those conventional touch devices.

### BRIEF DESCRIPTION OF THE DRAWINGS

The skilled artisan will understand that the drawings, described below, are for illustration purposes only. The drawings are not intended to limit the scope of the present teachings in any way. Like reference numerals designate corresponding parts throughout the several views.
**FIG. 1a** is a schematic top view of a conventional projective capacitive touch device;
**FIG. 1b** is a schematic sectional view taken along the line A-A of FIG 1a;
**FIG 2** is a schematic view of two touch points appearing on the conventional projective capacitive touch device of FIG. 1a and FIG 1b;
**FIG 3a** is a schematic circuit diagram of the touch device according to the first embodiment of the present disclosure;
**FIG 3b** is a schematic sectional view of the touch device of FIG. 3 a;
**FIG 4a** is a schematic circuit diagram of the touch device according to the second embodiment of the present disclosure;
**FIG 4b** is a schematic sectional view of the touch device of FIG 4a;
**FIG 5** is a flow chart showing a method of determining real coordinates of multiple touch points according to the first embodiment of the present disclosure;
**FIGs. 6a-6c** are schematic views of two touch points occurring in two neighboring electrode areas;
**FIGs. 7a-7b** are schematic views of two touch points occurring in two diagonal electrode areas;
**FIG. 8** is a schematic view of two touch points occurring on the same electrode;
**FIG. 9** is a flow chart showing a method of determining real coordinates of multiple touch points according to the second embodiment of the present disclosure.

### DETAILED DESCRIPTION OF THE EMBODIMENTS

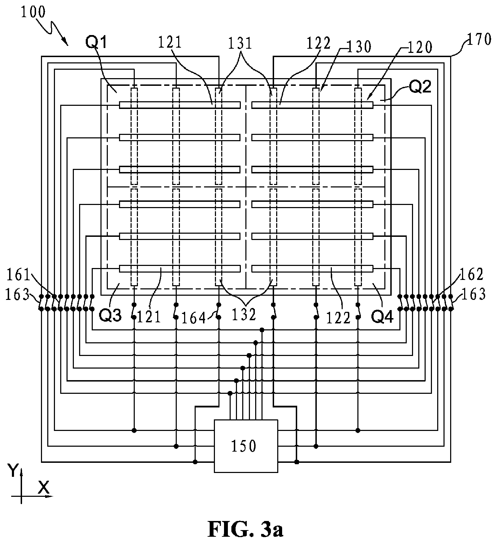

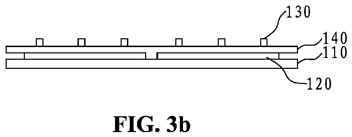

**FIGs. 3a** and **3b** show the touch device 100 for determining real coordinates of multiple touch points in accordance with the first embodiment of the present disclosure. The touch device 100 includes a substrate 110, a plurality of first electrodes 120 disposed in a first direction X, a plurality of second electrodes 130 disposed in a second direction Y, an insulating layer 140, a processor 150, a plurality of wires 170 and a plurality of switches 161, 162, 163, 164. The first electrodes 120 are placed on the substrate 110. The first direction X is different from the second direction Y. The first electrodes 120 and the second electrodes 130 are disposed on opposite side of the insulating layer 140, such that the first electrodes 130 are insulated with the second electrodes 130. The first electrodes 120 intersect with the second electrodes 130 to define a plurality of intersection. The insulating layer 140 is substantially planar. Moreover, each first electrode 120 is divided into two separate electrode parts spaced apart from each other in the first direction X, wich are a first A electrode 121 and a first B electrode 122. Each second electrode 130 is divided into two separate electrode parts spaced apart from each other in the second direction Y, which are a second A electrode 131 and a second B electrode 132. Therefore, the first A electrodes 121 intersect with the second A electrodes 131 to define a first electrode area Q1. In the same way, the first B electrodes 122 intersect with the second A electrodes 131 to form a first electrode area Q2; the first A electrodes 121 intersect with the second B electrodes 132 to define a first electrode area Q3; the first B electrodes 122 intersect with the second B electrodes 132 to define a first electrode area Q4. The switches 161 interconnect the first A electrodes 121 and the processor 150. The switches 162 interconnect the first B electrodes 122 and the processor 150. Theswitches 163 interconnect the second A electrodes 131 and the processor 150. The switches 164 interconnect the second B electrodes 132 and the processor 150. The touch device 100 further includes a scanning circuit (not shown) having a Normal Scanning Circuit and Split Scanning Circuit. These two different scanning circuits are both utilized to scan the first electrodes 120 and the second electrodes 130, when multiple touch points occur on the touch device 100.

The switches 161, 162, 163, 164 are controlled by the scanning circuit. When all switches 161, 162, 163, 164 are turned off to transmit scanning signals to the electrodes, scanning signals are transmitted to both the first A electrodes 121 and the first B electrodes 122 resulting in the first A electrodes 121 and the first B electrodes 122 together perform as the whole structure, which is the first electrodes 120. In like manner, scanning signals are transmitted to both the second A electrodes 131 and the second B electrodes 132, resulting in the second A electrodes 131 and the second B 132 together perform as the whole structure, which is the second electrodes 130. At this time, the Normal Scanning Circuit starts to scan the first electrodes 120 and the second electrodes 130.

When the switches 161 connected to the first A electrodes 121 are turned off and the switches 162, 163, 164 are turned on, the Split Scanning Circuit starts to scan the first A electrodes 121. When the switches 162 connected to the first B electrodes 122 are turned off and the switches 161, 163, 164 are turned on, the Split Scanning Circuit starts to scan the first B electrodes 122. When the switches 163 connected to the second A electrodes 131 are turned off and the switches 161, 162, 164 are turned on, the Split Scanning Circuit starts to scan the second A electrodes 131. When the switches 164 connected to the second B electrodes 132 are turned off and the switches 161, 162, 163 are turned on, the Split Scanning Circuit starts to scan the second B electrodes 132.

To fulfill various design requirements, the configuration of the first A electrodes 121, the first B electrodes 122, the second A electrodes 131, and the second B electrodes 132 have different forms. For example, the first A electrodes 121 are symmetrical to the first B electrodes 122, while the second A electrodes 131 are symmetrical to the second B electrodes 132; thus, the four electrode areas Q1, Q2, Q3, Q4 are symmetrical to each other. In another example is, the first A electrodes 121 are not symmetrical to the first B electrodes 122, while the second A electrodes 131 are not symmetrical to the first B electrodes 132; thus, the four electrode areas Q1, Q2, Q3, Q4 are not symmetrical to each other.

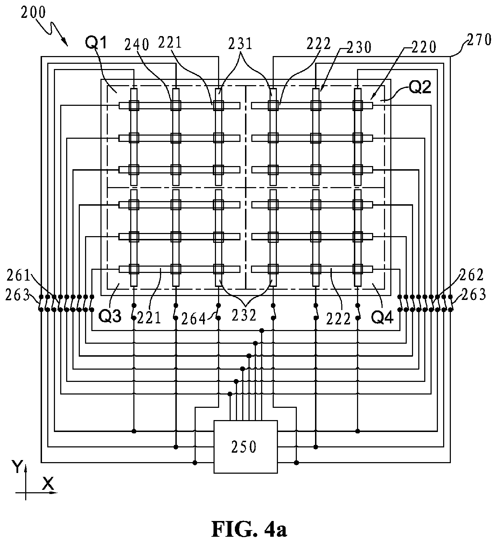

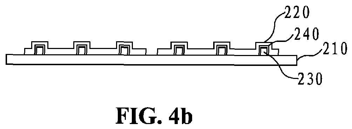

**FIGS. 4a** **and** **4b** illustrate the touch device 200 for determining real coordinates of multiple touch points in accordance with the second embodiment of the present disclosure. Similar to the touch device 100 in the accordance with the first embodiment of the present disclosure, the touch device 200 includes a substrate 210, a plurality of first electrodes 220 disposed in the first direction X, a plurality of second electrodes 230 disposed in the second direction Y, a plurality of insulating elements 240, a processor 250, a plurality of wires 270 and a plurality of switches 261, 262, 263, 264. The difference is that the first electrodes 220 and the second electrodes 230 are both placed on a same surface of the substrate 210. In order to insulate the first electrodes 220 from the second electrodes 230, the insulating elements 240 are located between the first electrodes 220 and the second electrodes 230 at the intersections of the two electrodes. In addition, each first electrode 220 is divided into two separate electrode parts, which are a first A electrode 221 and a first B electrode 222, in the first direction X, while each second electrode 230 is divided into two separate electrode parts, a second A electrode 231 and a second B electrode 232, in the second direction Y. The other components of the touch device 200 according to the second embodiment of the present disclosure are the same as those of the touch device 100 mentioned above.

Shape of the first electrodes and the second electrodes could be of any geometry contour or combination of different geometry contours, such as stripe, polygon and so on.

It is to be understood that there are at least two first electrodes in the first direction X and at least two second electrodes in the second direction Y in the present disclosure. The resolution and the size of the touch device in the present disclosure are the main factors influencing the number of electrodes. Usually, higher resolution or larger size requires more electrodes.

Being applied in various devices, the touch device of the present disclosure may be opaque, e.g. the touch pads of the laptop computer, or it may be transparent, e.g. the touch screen of the cell phone. The first electrodes and the second electrodes are made of conductive material, while the insulating layer and the insulating elements are made of insulating material. The opaque conductive material could be selected from copper, alumina, gold and other metals, while the transparent conductive material could be Indium Tin Oxides (ITO), Aluminum-doped zinc Oxide, transparent conductive oxides and so on. The insulating material could be plastic, glass and so on.

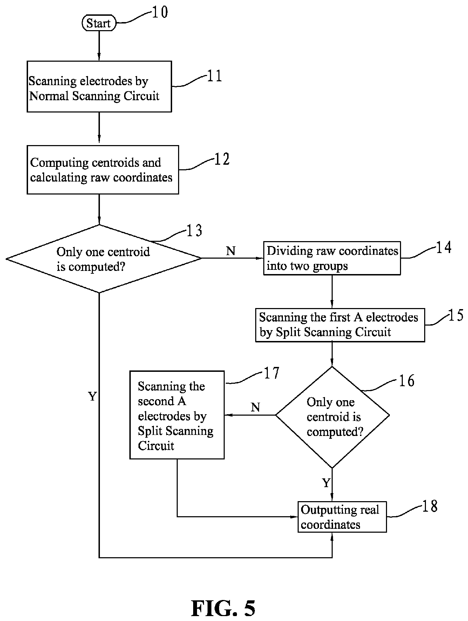

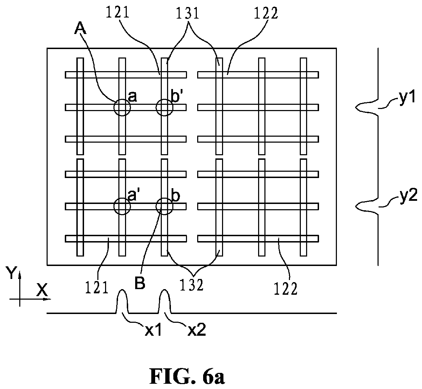

When at least two touch points appear on the surface of the touch device for determining real coordinates of multiple touch points in the present disclosure, the real coordinates of the touch points can be determined by using the method of determining real coordinates of multiple touch points shown in **FIG. 5****.** The situation of two touch points appearing on the surface of the projective capacitive touch device is taken as an example, referring to **FIGS. 6a-6c****.** The process starts at step 10 where the touch device is in standby. When two touch points, A and B, occur in two neighboring electrode areas on the surface of the touch device, the process proceeds to step 11.

In step 11, all the switches are turned off, and then the processor :respectively applies the scanning signal to the first electrodes and the second electrodes through the wires. The Normal Scanning Circuit scans the first electrodes in the first direction X and the second electrodes in the second direction Y. The signals representing the changes in the self-capacitance in both the first direction X and the second direction Y caused by two touch points A, B are transmitted to the processor 150 (shown in FIG. 3a).

Step 12 is implemented, in which the centroids x1, x2 of changes in self capacitance corresponding to two touch points A, B in the first direction X and the centroids y1, y2 of change in self capacitance corresponding to two touch points A, B in the second direction Y are computed by the processor 150 based on the signals representing the changes in the self-capacitance created in step 11. According to location of the second A electrodes 131 and the second B electrodes 132, the processor 150 can determine that the centroid y1 is on the second A electrodes 131 and the centroid y2 is on the second B electrodes 132. By intersecting the centroids x1, x2, y1, y2, four raw coordinates a(x1,y1), b(x2,y2), a'(x1,y2) and b'(x2,y1) are calculated, referring to **FIG. 6a****.**

In step 13, it is determined whether only one centroid is computed in either the first direction X or the second direction Y If not, the process proceeds to step 14, in which the processor 150 defines two diagonal coordinates of those four raw coordinates as belonging to one group, thus leading to two groups of raw coordinates, i.e. a(x1,y1), b(x2,y2) in one group and a'(x1,y2), b'(x2,y1) in another group. As ghost coordinates exist, the raw coordinates in one of the two groups are real coordinates, while the raw coordinates in the other group are ghost coordinates.

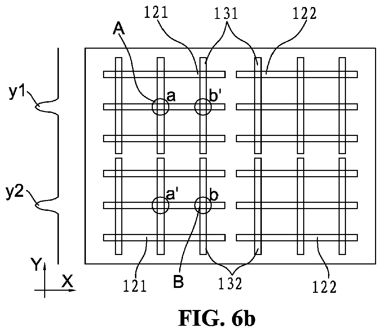

In step 15, only the switches connected to the first A electrodes 121 are turned off while other switches are turned on, and then the processor 150 transmits the scanning signal to the first A electrodes 121 through wires. The Split Scanning Circuit scans the first A electrodes 121. The signals representing the changes in the self capacitance caused by touch points are transmitted to the processor 150, referring to **FIG. 6b****.** The processor 150 computes the centroids of changes in self capacitance based on the signals transmitted to the processor 150.

In step 16, it is determined whether it is the only one centroid computed in step 15; If not, the process proceeds to step 17.

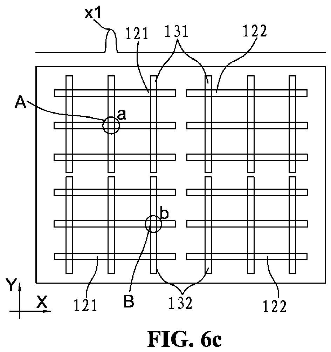

In step 17, only the switches connected to the second A electrodes 131 are turned off while other switches are turned on, and then the processor transmits the scanning signal to the second A electrodes 131 through wires. The Split Scanning Circuit scans the second A electrodes 131. The signals representing the changes in the self capacitance caused by the touch points are transmitted to the processor, referring to **FIG. 6c****.** The processor 150 computes the centroids of changes in self capacitance based on the signals transmitted to the processor 150.

After step 17, only one centroid x1 is computed. Moreover, only centroid y1 computed in step 12 is on the second A electrodes 131. Thus, the raw coordinates a(x1, y1) is the real coordinates and is in the same group as its diagonal coordinates b(x2, y2). So the group of raw coordinates a(x1,y1) and b(x2,y2) in step 14 containing the real coordinate a(x1,y1) are the real coordinates of two touch points A, B. The processor 150 outputs the real coordinates a(x1,y1) and b(x2,y2) in step 18.

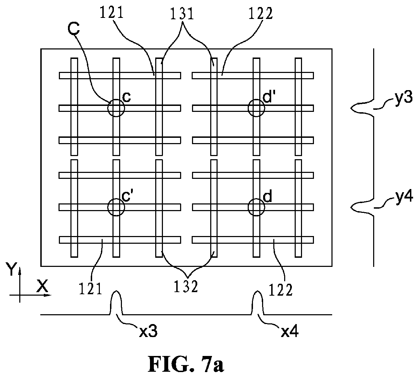

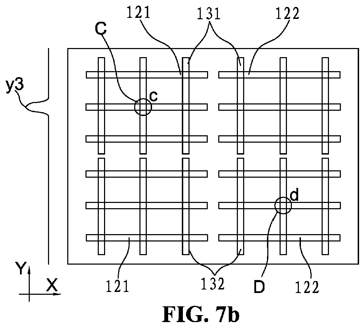

**FIGs. 7a** and **7b** show that two touch points C, D occur in two diagonal electrode areas. In step 12, according to location and definition of the first A electrodes 121 and the first B electrodes 122, the processor 150 can determine that the centroid x3 is on the first A electrodes 121 and the centroid x4 is on the first B electrodes 122. In this situation, the determined result in step 16 of the process in FIG 5 is that only one centroid y3 is computed in step 15. Thus, in the two groups of raw coordinates c(x3,y3), d(x4,y4) and c'(x3,y4), d'(x4,y3), the group of raw coordinates c(x3,y3) and d(x4,y4) containing the real coordinate c(x3,y3) are the real coordinates of two touch points C, D. After step 16, the process directly proceeds to step 18, in which the processer 150 outputs the real coordinates c(x3,y3) and d(x4,y4).

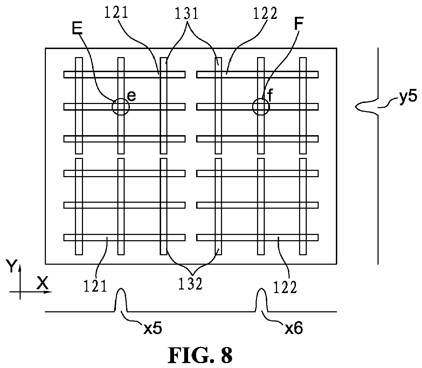

**FIG 8** illustrates that two touch points E, F occur on the same electrode. In this situation, the determined result in step 13 of the process in FIG. 5 is that only one centroid y5 is computed, which presents that only two raw coordinates e(x5,y5) and f(x6,y5) are calculated in step 12. Thus, these two raw coordinates are the real coordinates of two touch points E, F. After step 13, the process directly proceeds to step 18, in which the processer outputs the real coordinates e(x5,y5) and f(x6,y5).

The real coordinates of multiple touch points can be output to a control device or display for subsequent executions, which are not limited in the present disclosure.

By various designs of scanning circuit, the Split Scanning Circuit may scan, each time, any of the first or second electrodes with the switches connected to the scanned electrodes being turned off and the switches connected to the other electrodes being turned on. If more than one centroid is computed, the Split Scanning Circuit may repeat the process by scanning other electrodes of a different direction. For example, in step 15, the switches connected to the first B electrodes are turned off, and the Split Scanning Circuit scans the first B electrodes while the other electrodes are turned on. If two centroids are computed, in step 17, the switches connected to the second B electrodes are turned off, and the Split Scanning Circuit scans the second B electrodes while the other electrodes are turned on.

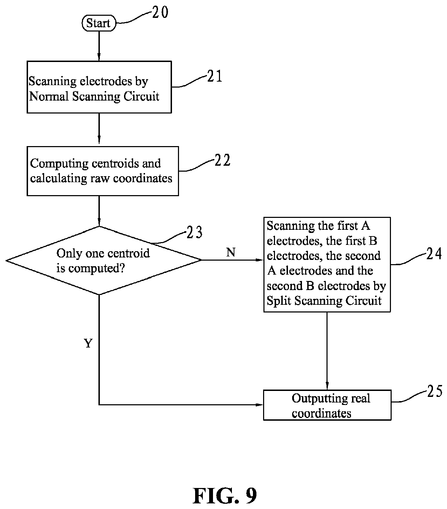

The real coordinates of multiple touch points can also be determined by using the method explained in **FIG. 9**. Similar to the method presented in **FIG. 5**, the process from step 20 to step 23 is the same as that from step 10 to step 13. Nevertheless, when two centroids are computed in both the first direction X and the second direction Y, the processor does not divide the raw coordinates, but, as in step 24, the Split Scanning Circuit scans all electrodes, the first A electrodes, the first B electrodes, the second A electrodes and the second B electrodes, in any order, with the switches, connected to the electrodes being scanned, being turned off while other switches are turned on, to find out the real coordinates directly. After step 24, the processor outputs the real coordinates in step 25.

The processor mentioned above includes a scanning unit, a computing unit and an outputting unit. The scanning unit is used to provide scanning signal to electrodes and receive the electric signal created during scanning of the electrodes, such as the signal representing the change in the self capacitance of the electrodes. The computing unit performs the role of computing centroid and calculating projection. Results computed by the computing unit, such as the real coordinates of the touch points, are being output by the outputting unit.

The method of determining real coordinates of two touch points mentioned above can also be utilized to determine real coordinates of more than two touch points. The Normal Scanning Circuit scans a plurality of electrodes both in a first direction and a second direction to detect raw coordinates of said touch points, and then the Split Scanning Circuit scans said electrodes to determine real coordinates of said touch points from said raw coordinates

One of multiple touch points described above is located on at least one intersection of the first electrodes and second electrodes.

While certain embodiments have been shown and described, various modifications and substitutions may be made thereto without departing from the scope of the invention. Therefore, it is to be understood that the present disclosure has been described by way of illustration and not limitations.

## Claims

1. A touch device (100; 200) for determining real coordinates of multiple touch points, comprising:
a plurality of electrodes (120; 130; 220; 230),
wherein said electrodes comprise a plurality of first electrodes (120; 220) disposed in a first direction (X) and a plurality of second electrodes (130; 230) disposed in a second direction (Y), said first direction intersecting said second direction (Y),
wherein each said first electrode (120; 220) comprises a first A electrode (121; 221) and a first B electrode (122; 222) spaced apart from said first A electrode (121; 221), and each said second electrode (130; 230) comprises a second A electrode (131; 231) and a second B electrode (132; 232) spaced apart from said second A electrode (131; 231),
wherein said first A electrode (121; 221) and said first B electrode (122; 222) intersect with said second A electrode (131; 231) and said second B electrode (132; 232) to define a plurality of intersection and electrode areas (Q1, Q2, Q3, Q4);
and
a scanning circuit connected to said electrodes (120; 130; 220; 230),
wherein the touch device further comprises a processor (150; 250) connected to said first A electrode (121; 221), said first B electrode (122; 222), said second A electrode (131; 231) and said second B electrode (132; 232);
said scanning circuit further comprises a plurality of switches (161-164; 261-264) connecting said first A electrode (121; 221), said first B electrode (122; 222), said second A electrode (131; 231) and said second B electrode (132; 232) to said processor (150; 250) respectively,
**characterized in that** said scanning circuit further comprises a Normal Scanning Circuit scanning said electrodes (120; 130; 220; 230) to find raw coordinates of said multiple touch point and a Split Scanning Circuit scanning said electrodes (120; 130; 220; 230) to eliminate ghost coordinates of said multiple touch points from said raw coordinates of said multiple touch points, wherein the Normal Scanning Circuit is configured to be used to scan the electrodes for detecting the raw coordinates of multiple touch points;
the Split Scanning Circuit is configured to be used to scan the electrode parts, from division of the electrodes into two separate parts, selected from the first A electrodes, the first B electrodes, the second A electrodes and the second B electrodes.

2. The touch device (100; 200) of claim 1, wherein said first electrodes (120; 220) are insulated from said second electrodes (130; 230).

3. A method of determining real coordinates of multiple touch points, comprising:
a) scanning a plurality of electrodes (120; 130; 220; 230) both in a first direction (X) and a second direction (Y) to detect raw coordinates of said multiple touch points by a Normal Scanning Circuit, wherein said electrodes (120; 130; 220; 230) comprise a plurality of first electrodes (120; 220) disposed in the first direction (X) and a plurality of second electrodes (130; 230) disposed in the second direction (Y), wherein each said first electrode (120; 220) comprises a first A electrode (121; 221) and a first B electrode (122; 222) spaced apart from said first A electrode (121; 221), each said second electrode (130; 230) comprises a second A electrode (131; 231.) and a second B electrode (132; 232) spaced apart from said second A electrode (131; 231), wherein said first A electrode (121; 221) and said first B electrode (122; 222) intersect with said second A electrode (131; 231) and said second B electrode (132; 232) to define plurality of intersection and electrode areas (Q1,Q2,Q3,Q4); said step a) further comprises computing centroids (x1, x2, y1, y2) of changes in self capacitance of said electrodes corresponding to said multiple touch points both in said first direction (X) and said second direction (Y), and calculating raw coordinates (a(x1, y1), b(x2, y2), a'(x1, y2), b'(x2, y1)) of said multiple touch points by intersecting said centroids (x1, x2, y1, y2) said step a) further comprises determining whether only one centroid is computed in either the first direction (X) or the second direction (Y); if so, the raw coordinates (a(x1, y1), b(x2, y2), a'(x1, y2), b'(x2, y1)) are real coordinates; if not, said raw coordinates (a(x1, y1), b(x2, y2), a'(x1, y2), b'(x2, y1)) are divided into two groups when at least two said centroids (x1, x2, y1, y2) are computed both in said first direction (X) and said second direction (Y) in said step a), and
b) scanning said electrodes (120; 130; 220; 230) to determine real coordinates of said multiple touch points in said raw coordinates by a Split Scanning Circuit, **characterized in that** said wherein said step b) further comprises steps of:
b1) scanning said first A electrodes (121; 221) by said Split Scanning Circuit to compute centroids (x1, x2) of changes in self capacitance on said first A electrodes (121; 221);
b2) scanning said second A electrodes (131; 231) by said Split Scanning Circuit to compute centroid (y1, y2) of change in self capacitance on said second A electrodes (1.31; 231) when at least two said centroids (x1, x2) are computed in said step b1);
b3) outputting said group of raw coordinates (a(x1, y1), b(x2, y2), a'(x1, y2), b'(x2, y1)) having said centroid (y1, y2) in said step b2) as real coordinates of said multiple touch points.

4. The method of claim 3, wherein said step b1), comprises scanning a plurality
of first B electrodes (122; 222) by said Split Scanning Circuit to compute centroids (y1) of changes in self capacitance of said first B electrodes (122; 222).

5. The method of claim 3, wherein said step b2) comprises scanning a plurality
of second B electrodes (132; 232) by said Split Scanning Circuit to compute centroids (y2) of changes in self capacitance of said second B electrodes (132; 232).

6. The method of claim 3, wherein said step b) further comprises steps of:
b1) scanning a plurality of first A electrodes (121; 221) by said Split Scanning Circuit to compute centroids (x1, x2) of changes in self capacitance of said first A electrodes (121; 221); and
b2) outputting said group of raw coordinates having said centroid (x1, x2) in said step b1) as real coordinates (a(x1, y1), b(x2, y2), a'(x1, y2), b'(x2, y1)) of said multiple touch points when only one centroid (x1, x2) is computed in said step b1).

7. The method of claim 6, wherein said step b1) comprises scanning a plurality
of first B electrodes (122; 222) by said Split Scanning Circuit to compute centroids (y1, y2) of changes in self capacitance of said first B electrodes (122; 222).

## Patentansprüche

1. Berührungsvorrichtung (100; 200) zur Bestimmung realer Koordinaten mehrerer Berührungspunkte, umfassend:
eine Vielzahl von Elektroden (120; 130; 220; 230),
wobei die genannten Elektroden eine Vielzahl von ersten Elektroden (120; 220), die in einer ersten Richtung (X) angeordneten sind, und eine Vielzahl von zweiten Elektroden (130; 230), die in einer zweiten Richtung (Y) angeordneten sind, umfassen, die genannte erste Richtung kreuzt die genannte zweite Richtung (Y),
wobei jede genannte erste Elektrode (120; 220) eine erste A-Elektrode (121; 221) und eine ersten B-Elektrode (122; 222) umfasst, die von der genannten ersten A-Elektrode (121; 221) beabstandet sind, und jede genannte zweite Elektrode (130; 230) umfasst eine zweite A-Elektrode (131; 231) und eine zweite B-Elektrode (132; 232), die von der genannten zweiten A-Elektrode (131; 231) beabstandet sind, wobei die genannt erste A-Elektrode (121; 221) und die genannte erste B-Elektrode (122; 222) sich mit der genannten zweiten A-Elektrode (131; 231) und der genannten zweiten B-Elektrode (132; 232) kreuzen, um eine Vielzahl von Schnittstellen und Elektrodenflächen (Q1, Q2, Q3, Q4) zu definieren;
und
eine Abtastschaltung, die mit den genannten Elektroden (120; 130; 220; 230) verbunden ist,
wobei die Berührungsvorrichtung ferner einen Prozessor (150; 250) umfasst, der mit der genannten ersten A-Elektrode (121, 221), der genannten ersten B-Elektrode (122; 222), der genannten zweiten A-Elektrode (131; 231) und der genannten zweiten B-Elektrode (132; 232) verbunden ist;
die genannte Abtastschaltung umfasst ferner eine Vielzahl von Schaltern (161-164; 261-264), die die genannte erste A-Elektrode (121; 221), die genannte erste B-Elektrode (122; 222), die genannte zweite A-Elektrode (131; 231) und die genannte zweite B-Elektrode (132; 232) jeweils mit dem Prozessor (150; 250) verbinden, **dadurch gekennzeichnet, dass** die Abtastschaltung ferner eine Normal-Abtastschaltung umfasst, die die genannten Elektroden (120; 130; 220; 230) scannt, um Roh-Koordinaten der genannten mehreren Berührungspunkte zu finden, und eine Trennung-Abtastschaltung, die die genannten Elektroden (120; 130; 220; 230) scannt, um Ghost- Koordinaten der genannten mehreren Berührungspunkten aus den genannten Roh Koordination der genannten mehreren Berührungspunkten zu eliminieren,
wobei die Normal-Abtastschaltung konfiguriert ist, um zum Scannen der Elektroden zum Ermitteln der Roh Koordinaten von mehreren Berührungspunkten verwendet zu werden;
die Trenn-Abtastschaltung ist konfiguriert, um zum Scannen der Elektrodenteile, aus der Teilung der Elektroden in zwei separate Teile, die von den ersten A-Elektroden, den ersten B-Elektroden, den zweiten A-Elektroden und den zweiten B-Elektroden ausgewählt werden, verwendet zu werden.

2. Die Berührungsvorrichtung (100; 200) nach Anspruch 1, wobei die genannten ersten Elektroden (120; 220) von den genannten zweiten Elektroden (130; 230) isoliert sind.

3. Ein Verfahren zur Bestimmung realer Koordinaten von mehreren Berührungspunkten, umfassend:
a)
Scannen einer Vielzahl von Elektroden (120; 130; 220; 230) beide in einer ersten Richtung (X) und einer zweiten Richtung (Y) zum Ermitteln von Roh-Koordinaten der genannten mehreren Berührungspunkten durch eine Normal-Abtastschaltung, wobei die genannten Elektroden (120; 130; 220; 230) eine Vielzahl von ersten Elektroden (120; 220) umfassen, die in der Richtung (X) angeordnet sind, und eine Vielzahl zweiten Elektroden (130; 230) die in der zweiten Richtung (Y) angeordnet sind,
wobei jede genannte erste Elektrode (120; 220) eine erste A-Elektrode (121; 221) und eine erste B-Elektrode (122; 222), die von der genannten ersten A-Elektrode (121; 221) beabstandet ist, umfasst, jede genannte zweite Elektrode (130; 230) umfasst eine zweite A-Elektrode (131; 231) und eine zweite B-Elektrode (132; 232), die von der genannten zweiten A-Elektrode (131; 231) beabstandet ist;
wobei sich die genannte erste A-Elektrode (121; 221) und die genannte erste B-Elektrode (122; 222) mit der genannten zweiten A-Elektrode (131; 231) und der genannten zweiten B-Elektrode (132; 232) kreuzen, um eine Vielzahl von Schnittstellen und Elektrodenflächen (Q1,Q2,Q3,Q4) zu definieren;
der genannte Schritt a) umfasst ferner das Berechnen von Schwerpunkten (X1, x2, y1, y2) von Änderungen der Eigenkapazität der genannten Elektroden korrespondierend zu den genannten mehreren Berührungspunkten, sowohl in der genannten ersten Richtung (X) und der genannten zweiten Richtung (Y), und Berechnen der Roh-Koordinaten (a(x1, y1), b(x2, y2), a'(x1, y2), b'(x2, y1)) der genannten mehreren Berührungspunkte durch Kreuzen der genannten Schwerpunkte (x1, x2, y1, y2),
der genannte Schritt a)
umfasst ferner die Bestimmung, ob nur ein Schwerpunkt entweder in der ersten Richtung (X) oder der zweiten Richtung (Y) berechnet wird;
wenn ja sind die Roh Koordinaten (a(x1, y1), b(x2, y2), a'(x1, y2), b'(x2, y1)) reale Koordinaten;
wenn nein werden die genannten Roh Koordinaten ((a(x1, y1), b(x2, y2), a'(x1, y2), b'(x2, y1) in zwei Gruppen unterteilt, wobei mindestens zwei genannte Schwerpunkte (x1, x2, y1, y2) beide in der genannten ersten Richtung (X) und der genannten zweiten Richtung (Y) im genannten Schritt a) berechnet werden, und b) Scannen der genannten Elektroden (120; 130; 220; 230), um reale Koordinaten der genannten mehreren Berührungspunkte in den genannten Roh-Koordinaten durch eine Trenn-Abtastschaltung zu bestimmen,
**dadurch gekennzeichnet, dass** der genannte Schritt b)
ferner die Schritte umfasst:
b1)
Scannen der genannten ersten A-Elektroden (121; 221) durch die Trenn-Abtastschaltung, um Schwerpunkte (x1, x2) von Änderungen der Eigenkapazität auf den genannten ersten A-Elektroden (121; 221) zu berechnen;
b2)
Scannen der genannten zweiten A-Elektroden (131; 231) durch die Trenn-Abtastschaltung, um Schwerpunkte (y1, y2) der Änderung der Eigenkapazität auf den genannten zweiten A-Elektroden (131; 231) zu berechnen, wenn mindestens zwei genannte Schwerpunkte (x1, x2) in dem genannten Schritt b1) berechnet werden;
b3)
Ausgeben der genannten Gruppe von Roh- Koordinaten (a(x1, y1), b(x2, y2), a'(x1, y2), b'(x2, y1)) mit dem genannten Schwerpunkt (y1, y2) in dem genannten Schritt b2) als reale Koordinaten der genannten mehreren Berührungspunkte.

4. Das Verfahren nach Anspruch 3, wobei der genannte Schritt b1) umfasst, Scannen einer Vielzahl von ersten B-Elektroden (122; 222) durch die Trenn-Abtastschaltung, um Schwerpunkte (y1) von Änderungen der Eigenkapazität der genannten ersten B-Elektroden (122, 222) zu berechnen.

5. Das Verfahren nach Anspruch 3, wobei der genannte Schritt b2) Scannen einer Vielzahl von zweiten B-Elektroden (132; 232) durch die Trenn-Abtastschaltung umfasst, um Schwerpunkte (y2) von Änderungen der Eigenkapazität der genannten zweiten B-Elektroden (132, 232) zu berechnen.

6. Das Verfahren nach Anspruch 3, wobei der genannte Schritt b) ferner die Schritte umfasst:
b1)
Scannen einer Vielzahl von ersten A-Elektroden (121; 221) durch die Trenn-Abtastschaltung, um Schwerpunkte (x1, x2) von Änderungen der Eigenkapazität der genannten ersten A-Elektroden (121; 221) zu berechnen; und
b2)
Ausgeben der genannten Gruppe von Roh-Koordinaten mit dem genannten Schwerpunkt (x1, x2) in dem genannten Schritt b1)
als reale Koordinaten (a(x1, y1), b(x2, y2), a'(x1, y2), b'(x2, y1)) der genannten mehreren Berührungspunkte, wenn nur ein Schwerpunkt (x1, x2) in dem genannten Schritt b1) berechnet wird.

7. Das Verfahren nach Anspruch 6, wobei der genannte Schritt b1) umfasst, Scannen einer Vielzahl von ersten B-Elektroden (122; 222) durch die Trenn-Abtastschaltung, um Schwerpunkte (y1, y2) von Änderungen der Eigenkapazität der genannten ersten B-Elektroden (122, 222) zu berechnen.

## Revendications

1. Un dispositif tactile (100 ; 200) pour déterminer des coordonnées réelle de multiples points tactiles, comprenant :
une pluralité d'électrodes (120 ; 130 ; 220, 230),
dans lequel lesdites électrodes comprennent une pluralité de premières électrodes (120 ; 220) disposées suivant une première direction (X) et une pluralité de secondes électrodes (130 ; 230) disposées suivant une seconde direction (Y), ladite première direction étant en intersection avec ladite seconde direction (Y),
dans lequel chaque première électrode (120 ; 220) comporte une première électrode A (121 ; 221) et une première électrode B (122 ; 222) espacée vis à vis de ladite première électrode A (121 ; 221), et chaque seconde électrode (130 ; 230) comporte une seconde électrode A (131 ; 231 et une seconde électrode B (132 ; 232) espacée de ladite seconde électrode A (131 ; 231),
dans lequel ladite première électrode A (121 ; 221) et ladite première électrode B (122 ; 222) sont en intersection avec ladite seconde électrode A (131 ; 231) et ladite seconde électrode B (132 ; 232) pour définir une pluralité de zones d'électrodes et d'intersection (Q1, Q2, Q3, Q4) ;
et
un circuit de balayage connecté auxdites électrodes (120 ; 130 ; 220 ; 230), dans lequel le dispositif tactile comporte en outre un processeur (150 ; 250) connecté à ladite première électrode A (131 ; 221), ladite seconde électrode B (122 ; 222), ladite seconde électrode A (131 ; 231) et ladite seconde électrode B (132 ; 232) ;
ledit circuit de balayage comporte en outre une pluralité de commutateurs (161-164 ; 261-264) connectant respectivement ladite première électrode A (121 ; 221), ladite première électrode B (122; 222), ladite seconde électrode A (131 ; 231) et ladite seconde électrode B (132 ; 232) audit processeur (150 ; 250) ;
**caractérisé en ce que** ledit circuit de balayage comporte en outre un Circuit de Balayage Normal pour balayer lesdites électrodes (120; 130; 220; 230) pour trouver des coordonnées brutes desdits points tactiles multiples et un Circuit de Balayage Fractionné balayant lesdites électrodes (120; 130; 220; 230) pour éliminer les coordonnées fantômes desdits points tactiles multiples desdites coordonnées brutes desdits points tactiles multiples, dans lequel le Circuit de Balayage Normal est configuré pour être utilisé pour balayer les électrodes pour détecter les coordonnées brutes des points tactiles multiples ;
le Circuit de Balayage Fractionné est configuré pour être utilisé pour balayer les éléments d'électrode , de la division des électrodes en deux parties séparées, sélectionnées à partir des premières électrodes A, des premières électrodes B, des secondes électrodes A et des secondes électrodes B.

2. Le dispositif tactile (100 ; 200) de la revendication 1, dans lequel lesdites premières électrodes (120; 220) sont isolées desdites secondes électrodes (130 ; 230).

3. Un procédé de déterminer de coordonnées réelles de multiples point tactiles, comprenant :
(a) le balayage d'une pluralité d'électrodes (120 ; 130 ; 220, 230) à la fois suivant une première direction (X) et suivant une seconde direction (Y) pour détecter des coordonnées brutes desdits point tactiles multiples au moyen d'un Circuit de Balayage Normal,
dans lequel lesdites électrodes (120 ; 130, 220 ; 330) comportent une pluralité de premières électrodes (120; 220) disposées suivant la première direction (X) et une pluralité de secondes électrodes disposées suivant la seconde direction (Y),
dans lequel chaque première électrode (120 ; 220) comporte une première électrode A (121 ; 221) et une première électrode B (122 ; 222) espacée de ladite première électrode A (121 ; 221), et chaque seconde électrode (130 ; 230) comporte une seconde électrode A (131 ; 231) et une seconde électrode B (132 ; 232) espacée de ladite seconde électrode A (131 ; 231),
dans lequel ladite première électrode A (121 ; 221) et ladite première électrode B (122 ; 222) sont en intersection avec ladite seconde électrode A (131 ; 231) et ladite seconde électrode B (132 ; 232) pour définir une pluralité de zones d'électrodes et d'intersection. (Q1, Q2, Q3, Q4) ;
ladite étape (a) comprenant en outre le calcul de centroïdes (x1, x2, y1, y2) de changements d'autocapacité desdites électrodes correspondant auxdits points tactiles multiples à la fois suivant ladite première direction (X) et ladite seconde direction (Y), et le calcul des coordonnées brutes (a(x1, y1), b(x2, y2), a'(x1, y2), b'(x2, y1)) desdits points tactiles multiples par l'intersection desdits centroïde (x1, x2, y1, y2),
ladite étape (a) comprenant en outre la détermination du fait de savoir si seule une centroïde est calculée suivant soit la première direction (X) ou la seconde direction (Y) ;
et le cas échéant, les coordonnées brutes (a(x1, y1), b(x2, y2), a'(x1, y2), b'(x2, y1)) sont des coordonnées réelles ;
sinon, lesdites coordonnées brutes (a(x1, y1), b(x2, y2), a'(x1, y2), b'(x2, y1)) sont divisées en deux groupes lorsque au moins deux desdites centroïde (x1, x2, y1, y2) sont calculées suivant à la fois ladite première direction (X) et suivant la dite seconde direction (Y) dans ladite étape a), et
b) le balayage desdites électrodes (120 ; 130 ; 220 ; 230) pour déterminer les coordonnées réelles desdits points tactiles multiples au sein desdites coordonnées brutes au moyen d'un Circuit de Balayage Fractionné,
**caractérisé en ce que** ladite étape (b) comporte en outre les étapes de :
b1) balayage desdites premières électrodes A (121, 221) au moyen dudit Circuit de Balayage Fractionné pour le calcul des centroïdes (x1, x2) des changements d'auto-capacité sur lesdites premières électrodes A (121 ; 221) ;
b2) balayage desdites secondes électrodes A (131, 231) au moyen dudit Circuit de Balayage Fractionné pour le calcul des centroïdes (y1, y2) des changements d'auto-capacité sur lesdites secondes électrodes A (131 ; 231) lorsque au moins deux desdites centroïdes (x1 ; x2) sont calculés dans ladite étape b1) ;
b3) générer en sortie ledit groupe de coordonnées brutes (a(x1, y1), b(x2, y2), a'(x1, y2), b'(x2, y1)) ayant ladite centroïde (y1, y2) dans ladite étape b2 comme coordonnées réelle desdits points tactiles multiples.

4. Le procédé de la revendication 3 dans lequel ladite étape b1) comporte le balayage d'une pluralité de premières électrodes B (122 ; 222) au moyen dudit Circuit de Balayage Fractionné pour calcule les centroïdes (y1) des changements d'auto capacité desdites premières électrodes B (122 ; 222).

5. Le procédé de la revendication 3, dans lequel ladite étape b2) comporte le balayage d'une pluralité de secondes électrodes B (132 ; 232) au moyen dudit Circuit de Balayage Fractionné pour le calcul des centroïdes (y2) des changements d'auto capacité desdites secondes électrodes B (132 ; 232).

6. Le procédé de la revendication 3, dans lequel ladite étape b) comporte en outre les étapes de :
b1) le balayage d'une pluralité de premières électrodes A (121 ; 221) au moyen dudit Circuit de Balayage Fractionné pour le calcul des centroïdes (x1, x2) des changements d'auto capacité desdites premières électrodes B (121; 221) ; et
b2) la génération en sortie dudit groupe de coordonnées brutes ayant ledit centroïde (x1, x2) dans ladite étape b1) comme coordonnées réelles (a(x1, y1), b(x2, y2), a'(x1, y2), b'(x2, y1)) desdits points tactiles multiples lorsque seulement un seul centroide (x1, x2) est calculé lors de ladite étape b1).

7. Le procédé de la revendication 6, dans lequel la dite étape b1) comporte le balayage d'une pluralité de premières électrodes B (122 ; 222) au moyen dudit Circuit de Balayage Fractionné pour calculer les centroïdes (y1, y2) des changements d'auto capacité desdites premières électrodes B (122 ; 222).
